Europäisches Patentamt

European Patent Office

Office européen des brevets

(11) Publication number: **0 201 319**
**B1**

(12) **EUROPEAN PATENT SPECIFICATION**

(45) Date of publication of patent specification: **31.10.90**

(51) Int. Cl.⁵: **C 04 B 35/18, C 01 F 7/02**

(21) Application number: **86303450.0**

(22) Date of filing: **07.05.86**

(54) Method of producing cordierite ceramics.

(30) Priority: **10.05.85 JP 98075/85**

(43) Date of publication of application:
**12.11.86 Bulletin 86/46**

(45) Publication of the grant of the patent:
**31.10.90 Bulletin 90/44**

(84) Designated Contracting States:
**BE DE FR GB SE**

(56) References cited:
**JP-A-5 954 682**
**US-A-4 251 377**

(73) Proprietor: **NGK INSULATORS, LTD.**
**2-56, Suda-cho, Mizuho-ku**
**Nagoya-shi, Aichi 467 (JP)**

(72) Inventor: **Takehara, Toshio**
**90 Ryokuen-Minami 3-Chome**
**Kagamigahara City Gifu Pref. (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

**EP 0 201 319 B1**

**Description**

This invention relates to a method of producing cordierite ceramics having excellent thermal shock resistance, and more particularly to ceramic materials for use in an extrusion molding process.

Since cordierite ceramics have small thermal expansion coefficient, excellent high temperature properties and good surface properties, they are widely used in industry, and particularly honeycomb structural bodies made of cordierite ceramics are used as a catalyst carrier for the purification of automobile exhaust gas, a catalyst carrier for deodorization, a filter for the purification of exhaust gas, a heat exchange structure and so on.

In the production of cordierite ceramics used for such applications, talc, kaolin, silica, alumina, aluminium hydroxide and the like are generally used as a starting material for the formation of cordierite ($2MgO.2Al_2O_3.5SiO_2$). Among these, magnesia material such as talc or the like is disclosed in US Patent No. 4,280,845, and kaolin material is disclosed in US Patent No. 3,885,977. Furthermore, aluminium hydroxide is generally used as an alumina material. In the latter case, cracks tend to be produced by shrinkage and endothermic reactions in the firing associated with dehydration of aluminium hydroxide. Therefore, a mixture of α-alumina and aluminium hydroxide or α-alumina alone is used as the alumina material.

As a method of producing a honeycomb structural body from the above materials, US Patent No. 3,885,977 discloses the production of the honeycomb body having a low thermal expansion coefficient by an extrusion molding process.

Although thermal shock resistance of about 700—800°C is obtained in such a honeycomb structural body having an outer diameter of 11.8 cm (4.66 inches) and a length of 10 cm (4 inches) as a result of achieving a low thermal expansion in the above conventional technique, there is scattering in the properties of the product when many are produced. Therefore, it is not yet known how consistently to produce cordierite ceramics having a higher thermal shock resistance.

It is an object of the invention to overcome the aforementioned problems and to provide a method of producing cordierite ceramics which have a low thermal expansion coefficient equal to that of the conventional product, a higher thermal shock resistance and a small scattering in properties.

According to the invention, there is provided a method of producing cordierite ceramics by preparing a batch material containing α-alumina for the formation of cordierite, molding and firing it, characterized in that said α-alumina is adjusted to have a particle size distribution of α-alumina such that particles having a particle size of not more than 3 μm is not more than 17% by weight and a particle size of 50% by cumulative weight is between 4 μm and 15 μm.

The expression "particle size of 50% by cumulative weight" means the particle size at 50% by cumulative weight on a graph plotting particle size against cumulative weight.

The invention will now be explained and embodiments described with reference to the accompanying drawings, wherein:

Figs. 1a and 1b are SEM photographs (secondary electron image) showing granular structures of plate extrusion body and powder of α-alumina material according to the invention, respectively;

Figs. 2a and 2b are SEM photographs (secondary electron image) showing granular structures of plate extrusion body and powder of α-alumina material in the reference example, respectively;

Fig. 3 is a graph showing particle size distributions of α-alumina in the invention and the reference example; and

Fig. 4 is a graph showing a relation between oil absorption and porosity of cordierite ceramic body according to the invention.

The invention involves defining the alumina material for cordierite formation as described above in the method of stably producing cordierite ceramics having a low thermal expansion coefficient and an excellent thermal shock resistance. The reason for the limitations in the invention will be described below.

First, the alumina material is α-alumina because when all the alumina material is aluminium hydroxide, there are problems due to the dehydration reaction during the firing. As α-alumina, it is preferable to use complete α-alumina in which alumina intermediate such as γ-alumina or the like is not identified as a crystal phase. Furthermore, the alumina intermediates produced between aluminium hydroxide and α-alumina such as χ, μ, γ, δ, η, θ-aluminas have high reactivity and adversely affect the cordierite reaction stage as mentioned later, so that they must not be incorporated into the α-alumina.

As to the particle size of α-alumina, when fine particles of not more than 3 μm in size are present, the reaction with talc as a magnesia material proceeds at a relatively low temperature of not more than about 1,300°C and the main reaction between talc and kaolin for the cordierite formation having a low thermal expansion coefficient is obstructed, so that the amount of fine particles of not more than 3 μm is critical. Particularly, micro-fine particles of not more than 1 μm in size have high reactivity, so that the reaction with the other material such as talc, kaolin or the like proceeds to obstruct the above main reaction, the orientation of the cordierite crystal is degraded, and scattering of thermal shock resistance arises. Consequently, the use of micro-fine particles is not favourable. Further, when the amount of fine particles of not more than 3 μm exceeds 17% by weight, the thermal shock resistance is degraded.

The reason why the particle size of 50% by cumulative weight is between 4 μm and 15 μm is that when this particle size is less than 4 μm, these particles are almost fine and it is very difficult to produce the starting material and the thermal shock resistance is degraded. On the other hand, when this particle size

2

exceeds 15 µm, the reaction temperature for the cordierite formation becomes higher and the thermal expansion coefficient is high and as a result, the thermal shock resistance is degraded. The more preferred size distribution is such that the micro-fine particles of not more than 3 µm in size are not more than 12% by weight and the particle size of 50% by cumulative weight is between 4 µm and 12 µm. For instance, it is desirable to exclude coarse particles in accordance with the size of slit in the extrusion molding of honeycomb structural bodies.

Preferably, the α-alumina is in the secondary particle form because this suppresses the reaction with talc, kaolin or the like at low temperature and increases the porosity which is useful for a catalyst carrier or a filter. The term "particle size" used in the claims refers to the secondary particle form, not the primary particle form. Further the average particle size of the primary particles is preferably limited to 1—5 µm in order to achieve good reactivity in the cordierite formation. When the primary particle size is less than 1 µm, the cordierite formation and the main reaction with talc and kaolin are unfavourably obstructed, while when it exceeds 5 µm, the thermal shock resistance is unfavourably degraded. Moreover, the confirmation of the secondary particles is represented by SEM photograph (secondary electron image) as well as bulk density under pressure ($g/cm^3$) and oil absorption (ml/100 g) measured under pressurized conditions not breaking secondary particles as physical values showing the form of secondary particle. In the latter case, it is preferable that under a pressure of 1 t/$cm^2$, the bulk density is not more than 2.25 $g/cm^3$, and the oil absorption is not less than 18.5 ml/100 g.

The α-alumina is preferably of the sandy type, for the following reason. α-alumina is generally produced by a Bayer process. On the other hand, in order to obtain large α-alumina primary particles, there is usually so-called floury type wherein α-alumina is mixed with a fluorine containing mineralizer and fired in a rotary firing furnace at a relatively low temperature and the resulting aggregate is pulverized. However, since the floury type α-alumina has a flat crystal structure, a greater amount of micro-fine particles or crystal fragments is liable to be present owing to the pulverizing operation or the like. Such a floury type α-alumina adversely affects the reaction of cordierite formation. On the other hand, α-alumina obtained by the Bayer process of firing at a relatively high temperature without the mineralizer, i.e. sandy type, has particles wherein the crystal is developed in a direction of C-crystal axis, so that the crystal fragments are hardly produced in the pulverizing and the reactivity with talc or the like at low temperature is small. Therefore, the sandy type is particularly suitable for a starting material for the cordierite formation.

As to the amount of $Na_2O$ in the alumina material, the Bayer process for the manufacture of the alumina includes a step of dissolution of NaOH, so that the resulting alumina contains $Na_2O$ up to about 0.6 wt% as a total $Na_2O$(T—$Na_2O$) of water-soluble $Na_2O$(W—$Na_2O$) and insoluble $Na_2O$. Since the $Na_2O$ component obstructs the reaction of cordierite formation at high temperature, in order to stably obtain a high thermal shock resistance, it is more preferable to use middle or low soda grade of T—$Na_2O$ controlled to less than 0.3%. Moreover, since the contribution of particle size and the like of α-alumina to cordierite reaction is very large, good properties can be obtained even in alumina having an ordinary soda grade of T—$Na_2O$ = about 0.4% through Bayer process.

## Example

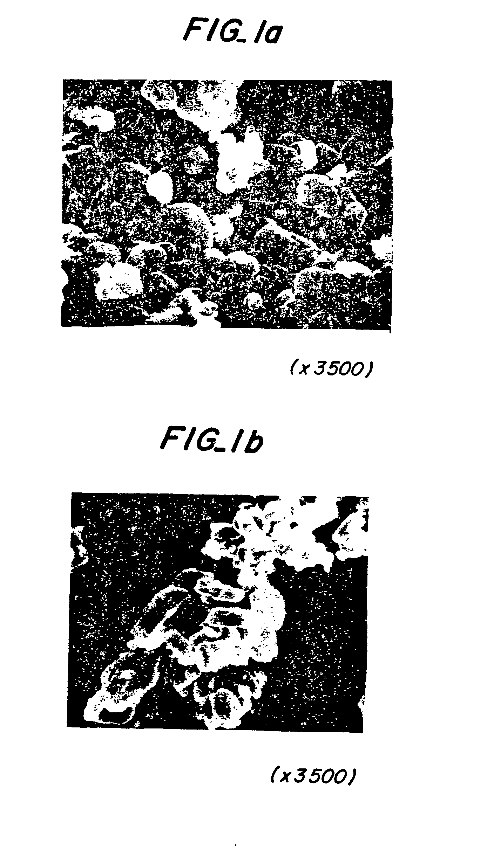

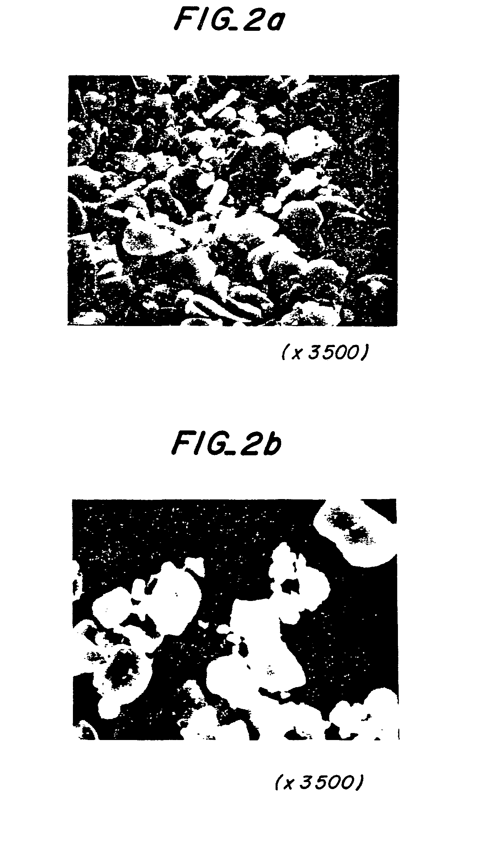

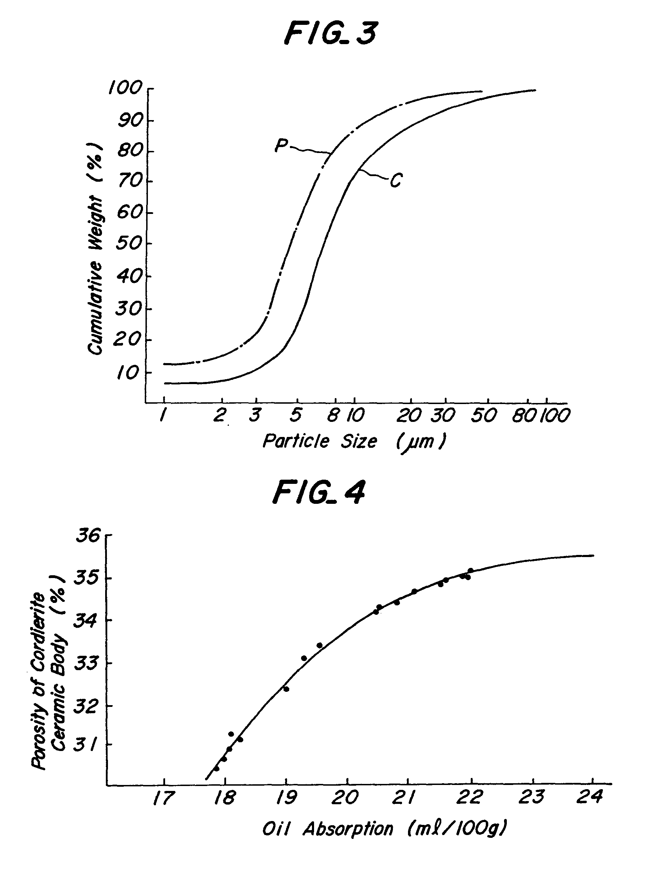

There was prepared α-alumina materials for Sample Nos. A—S shown in the following Table 1. In this Table, the measurement of particle size was performed by means of a laser particle size analyser made by C.I.L.A.S. using sodium hexametaphosphate as a dispersion agent. Further, the measurement of oil absorption was carried out according to JIS K5421 and K5101. In addition, the primary particle size was measured by SEM photograph. Moreover, among the above samples, the granular structures in plate extrusion body and powder of α-alumina itself as Sample No. C, which is within the range of the invention, are shown in Figs. 1a and 1b as SEM photograph, while the granular structures of plate extrusion body and powder as Sample No. P, which is outside the range of the invention, are shown in Figs. 2a and 2b as SEM photograph. Furthermore, curves of particle size distribution in Sample Nos. C and P are shown in Fig. 3.

Table 1

| No. | Fluorine mineralizer S (sandy type) F (floury type) | Amount of T-Na$_2$O (wt%) | Particle size | | primary particle size on average (µm) | Oil adsorption (ml/100 g) |
|---|---|---|---|---|---|---|
| | | | secondary particles | | | |
| | | | 3 µm ≧ (wt%) | particle size of 50% by cumulative weight (µm) | | |
| A | S | 0.26 | 10.5 | 6.3 | 0.8 | 21.1 |
| B | " | 0.26 | 11.1 | 6.4 | 1.0 | 20.5 |
| C | " | 0.24 | 10.8 | 6.7 | 2.0 | 21.8 |
| D | " | 0.23 | 10.8 | 8.5 | 5.0 | 21.6 |
| E | " | 0.24 | 10.5 | 8.8 | 6.0 | 21.9 |
| F | " | 0.26 | 12.0 | 7.1 | 2.2 | 20.8 |
| G | " | 0.23 | 15.0 | 5.7 | 2.4 | 19.3 |
| H | " | 0.25 | 17.0 | 4.0 | 2.4 | 19.0 |
| I | " | 0.25 | 18.5 | 3.7 | 2.2 | 18.3 |
| K | " | 0.22 | 10.7 | 8.0 | 2.6 | 21.9 |
| L | " | 0.22 | 10.0 | 15.0 | 2.6 | 20.5 |
| M | " | 0.23 | 8.5 | 17.0 | 2.4 | 24.0 |
| N | F | 0.26 | 10.0 | 6.5 | 2.4 | 22.0 |
| O | " | 0.25 | 16.8 | 6.5 | 2.2 | 19.5 |
| P | " | 0.25 | 21.4 | 4.5 | 2.2 | 18.1 |
| Q | S | 0.45 | 11.5 | 6.0 | 2.2 | 21.5 |
| R | F | 0.37 | 27.0 | 3.8 | 2.0 | 18.0 |
| S | " | 0.19 | 32.7 | 3.5 | 2.6 | 17.8 |

# EP 0 201 319 B1

Each of α-alumina materials shown in Table 1 was mixed with a cordierite base selected from combinations I—III of talc, kaolin and so on as shown in the following Table 2. The resulting cordierite was extrusion-molded into a honeycomb structural body having an outer diameter of 11.8 cm (4.66 inches), a length of 10 cm (4 inches) and a cell density of 62 cells per square centimetre (400 cells per square inch), wall thickness 0.015 cm (0.006 inches), which was fired under firing conditions shown in Table 2. Moreover, the α-alumina was subjected to a sieving treatment at 105 μm before the mixing, but in this case the particle size was the same as in Table 1. In addition, the chemical composition and particle size of the starting materials shown in Table 2 are shown in the following Table 3.

## Table 2

| | Composition (wt%) | | | | | | | Firing conditions |
|---|---|---|---|---|---|---|---|---|
| | talc | calcined talc | kaolin | calcined kaolin | alumina | aluminum hydroxide | silica | |
| I | 40.2 | - | 25.2 | 21.1 | 13.5 | - | - | 1410°C × 4H |
| II | 19.0 | 19.0 | 21.4 | 20.0 | 4.5 | 16.1 | - | 1395°C × 4H |
| III | 39.2 | - | 21.8 | - | 11.5 | 17.8 | 10.0 | 1410°C × 6H |

## Table 3

(wt%)

| | Ig·loss | $SiO_2$ | $Al_2O_3$ | MgO | $Fe_2O_3$ | $TiO_2$ | CaO | $Na_2O$ | $K_2O$ |
|---|---|---|---|---|---|---|---|---|---|
| talc | 5.2 | 61.9 | 0.7 | 31.8 | 0.6 | - | 0.1 | - | - |
| calcined talc | - | 66.1 | 0.2 | 33.6 | 0.1 | - | 0.1 | - | - |
| kaoline | 13.8 | 45.5 | 38.9 | - | 0.3 | 1.2 | 0.2 | 0.1 | - |
| calcined kaolin | - | 52.4 | 44.9 | - | 0.5 | 1.8 | - | 0.1 | 0.1 |
| aluminum hydroxide | 33.7 | - | 64.8 | - | - | - | - | 0.4 | - |
| silica | 0.1 | 99.7 | - | - | 0.1 | - | - | - | - |
| alumina A-S (average value) | - | - | 99.3 | - | - | - | - | 0.3 | - |

The evaluation results are shown in the following Table 4. In Table 4, the value of thermal expansion coefficient (CTE) from 40°C to 800°C is a value at 50 mm in length in the extrusion direction of the honeycomb, the spalling strength in electric furnace shows a temperature wherein cracks are produced when the sample is held in the electric furnace at a given temperature (step-up from 700°C at a rate of 25°C) for 20 minutes and taken out therefrom at room temperature. Furthermore, ⊚ is very good, o is good, and x is bad in the evaluation column. Moreover, Fig. 4 shows a relation between the porosity shown in Table 4 and the oil absorption shown in Table 1.

5

Table 4

| No. | Condition for the formation of base | Alumina used | CTE ($\times 10^{-6}$/°C, 40-800°C) | Spalling strength in electric furnace (n=2-5 average × °C) | Porosity (%) | Evaluation | Remarks |
|---|---|---|---|---|---|---|---|
| 1 | I | A | 0.72 | 770 | 34.7 | × | |
| 2 | " | B | 0.60 | 850 | 34.3 | ◎ | |
| 3 | " | C | 0.50 | 910 | 35.0 | ◎ | |
| 4 | " | D | 0.63 | 840 | 34.9 | o | |
| 5 | " | E | 0.80 | 780 | 35.0 | × | |
| 6 | " | F | 0.57 | 860 | 34.4 | ◎ | |
| 7 | " | G | 0.68 | 810 | 33.1 | o | |
| 8 | " | H | 0.68 | 800 | 32.4 | o | |
| 9 | " | I | 0.81 | 750 | 31.2 | × | |
| 10 | " | K | 0.62 | 870 | 35.0 | ◎ | |
| 11 | " | L | 0.68 | 820 | 34.2 | o | |
| 12 | " | M | 0.75 | 780 | 35.5 | × | |
| 13 | " | N | 0.58 | 840 | 35.2 | o | |
| 14 | " | O | 0.70 | 810 | 33.4 | o | |
| 15 | " | P | 0.84 | 750 | 30.9 | × | |
| 16 | " | Q | 0.62 | 880 (830-900) | 34.8 | o | large scattering |
| 17 | " | R | 0.92 | 730 | 30.7 | × | |
| 18 | " | S | 0.95 | 700 | 30.4 | × | |
| 19 | II | C | 0.63 | 880 | - | ◎ | |
| 20 | " | F | 0.63 | 870 | - | ◎ | |
| 21 | " | I | 0.83 | 770 | - | × | |
| 22 | III | C | 0.48 | 920 | - | ◎ | |
| 23 | " | F | 0.54 | 890 | - | ◎ | |
| 24 | " | I | 0.79 | 750 | - | × | |

EP 0 201 319 B1

# EP 0 201 319 B1

As is apparent from the above, cordierite ceramics using α-alumina material with particle size defined in the invention are very good or good in the evaluation, while the thermal shock resitance is poor in case of using α-alumina material having a particle size outside the range of the invention.

As mentioned above, according to the method of the invention, cordierite cermacis having a low thermal expansion coefficient equal to that of the conventional product, a high thermal shock resitance and a small scattering in properties can be produced by specifying the particle size distribution of α-alumina as the starting material. Therefore, ceramic honeycomb structural bodies having an excellent thermal shock resistance can stably be produced by using α-alumina having particle size defined in the invention as the starting material.

## Claims

1. A method of producing cordierite ceramics by preparing a batch material containing α-alumina for the formation of cordierite, molding and firing it, characterized in that said α-alumina has a particle size distribution such that particles having a size of not more than 3 μm are present in an amount of not more than 17% by weight and the particle size of 50% by cumulative weight is between 4 μm and 15 μm.

2. A method according to claim 1, wherein said α-alumina is in the form of secondary particles having a primary α-alumina average particle size in the range 1 to 5 μm.

3. A method according to claim 1 or claim 2, wherein said α-alumina is sandy type α-alumina.

4. A method according to any one of claims 1 to 3 wherein said cordierite ceramics is a ceramic honeycomb structural body.

## Patentansprüche

1. Verfahren zur Herstellung von Cordierit-Keramik durch Herstellung eines α-Aluminiumoxid enthaltenden Ausgangsmaterials für die Bildung von Cordierit, Formen und Brennen desselben, dadurch gekennzeichnet, daß das α-Aluminiumoxid eine solche Teilchengrößenverteilung hat, daß die Teilchen mit einer Größe von nicht mehr als 3 μm in einer Menge von nicht mehr als 17 Gew.-% vorliegen und die Teilchengröße von 50% des kumulativen Gewichtes zwischen 4 und 15 μm liegt.

2. Verfahren nach Anspruch 1, bei dem das α-Aluminiumoxid in Form von Sekundärteilchen mit einer durchschnittlichen Teilchengröße des primären α-Aluminiumoxid in dem Bereich von 1 bis 5 μm vorliegen.

3. Verfahren nach Anspruch 1 oder 2, bei dem das α-Aluminiumoxid ein α-Aluminiumoxid vom Sand-Typ ist.

4. Verfahren nach einem der Ansprüche 1 bis 3, bei dem die Cordierit-Keramik ein Keramik-Körper mit Bienenwabenstruktur ist.

## Revendications

1. Méthode pour produire des céramiques de cordiérite en préparant une charge de matériau contenant de l'alumine α pour la formation de cordiérite, et la moulant et en la cuisant, caractérisée en ce que la dite alumine α présente une distribution granulométrique telle que les particules dont la granularité n'est pas supérieure à 3 μm sont présentes dans une quantité qui ne dépasse pas 17% en poids et la granularité des particules de 50% de poids cumulatif est comprise entre 4 μm et 15 μm.

2. Méthode selon la revendication 1, dans laquelle l'alumine α se trouve sous la forme de particules secondaires ayant une granularité moyenne primaires d'alumine α de l'ordre de 1 à 5 μm.

3. Méthode selon la revendication 1 ou 2, dans laquelle la dite alumine α est une alumine α du type sableux.

4. Méthode selon l'une des revendications 1 à 3 dans laquelle la céramique de cordiérite est une un corps céramique à structure en nid d'abeille.

7

## FIG_ Ia

(x 3500)

## FIG_ Ib

(x 3500)

## FIG. 2a

(x 3500)

## FIG. 2b

(x 3500)

## FIG. 3

## FIG. 4